# EUROPEAN PATENT SPECIFICATION

(11) **EP 0 458 595 B1**
(45) Date of publication and mention of the grant of the patent: **30.03.1994**
(21) Application number: 91304589.4
(22) Date of filing: 21.05.1991
(51) Int. Cl.: A01C 23/02, A01C 23/00

(54) **Spreader for slurry**
Gülleverteiler
Epandeur de lisier

(30) Priority: 24.05.1990 GB 9011673
(43) Date of publication of application: 27.11.1991
(73) Proprietor: Colton, David William, Yelverton, Devon PL20 6PD (GB)
(72) Inventor: Colton, David William, Yelverton, Devon PL20 6PD (GB)
(74) Representative: Harrison, Ivor Stanley

(56) References cited:
- AT-B- 389 794
- DE-A- 3 113 429
- GB-A- 2 203 924
- SOVIET INVENTIONS ILLUSTRATED, Derwent Publications Ltd., Section Mechanical,week 8933, abstract no. 240444, P11, 27 September 19 & SU-A-1459625 (BELO AGRIC ACAD) 23 February 1989
- SOVIET INVENTIONS ILLUSTRATED, Derwent Publications Ltd., Section Mechanical,week 9002, abstract no. 014117, P11, 21 February 199 & SU-A-1470220 (BELO AGRIC ACAD) 7 April 1989
- SOVIET INVENTIONS ILLUSTRATED, Derwent Publications Ltd., Section Mechanical,week K37, abstract no. 763138, P11, 26 October 1983 & SU-A-971144 (ARMN AGRIC INST) 7 November 1982

## Description

The present invention relates to a spreader for slurry, particularly but not exclusively liquid manure.

Liquid manure is usually spread onto the fields from a tractor-drawn tanker by means of a hydraulic, pneumatic or mechanical (centrifugal) spreader which allows the quantity of manure dispensed per unit area to be regulated but does not permit much control over the spreading within that area. The present invention aims to overcome this problem.

Accordingly, the present invention provides a spreader for slurry, comprising a pair of relatively rotatable cylinders which are mounted coaxially one within the other and the inner one of which communicates with an inlet for the slurry, and means for pressurising the slurry in the inner cylinder, the cylindrical walls of the cylinders defining holes which can be brought into and out of register with each other by the relative rotation of the cylinders to allow the ejection therethrough of amounts of the slurry under pressure in the inner cylinder whilst the holes are in register.

Whilst the cylinders may have end walls which also define slurry discharge holes which come into and out of register with each other as the cylinders rotate relative to each other, it is envisaged that the body of the spreader formed by the two cylinders will usually be closed at opposite ends in a manner appropriate to the particular construction of the spreader, for example, by respective end walls of the cylinders or by an end wall of the outer cylinder at one end and an inlet duct or chamber connected to the inner cylinder at the other end.

The means for pressurising the slurry in the inner cylinder may comprise an external pump, for example, a pump for pumping the slurry to the inlet of the spreader from a source such as a tractor-drawn tanker, or a piston reciprocable in the inner cylinder. Such a piston may be of the double-acting type, the slurry being supplied to the two sides of the piston in alternation with the strokes thereof.

In a preferred embodiment, however, the inner cylinder is fixed and houses an auger or screw conveyor which is rotatable together with the outer cylinder to pump the slurry along the inner cylinder away from an inlet at or adjacent one end of the latter and to expel the slurry through the holes in the walls of the cylinders as they are brought into register with each other by the rotation of the outer cylinder. Preferably, the screw has a so-called "slow pitch" (that is, a relatively open helix) so that it does not obstruct the holes which come into register with each other as it rotates.

The screw conveyor may be formed by a helical ribbon in which the inner edges of its turns are spaced apart so that slurry can move along the inner cylinder to prime the spreader when the screw is not rotating. This helps to ensure an even distribution of slurry in the inner cylinder and hence an even ejection of slurry through the holes in use. The ribbon forming the screw may be supported for rotation with the outer cylinder by a shaft disposed coaxially within the inner cylinder or by bearings or like supports at opposite ends of the inner cylinder.

In a variant of this embodiment, two spreaders with oppositely-handed screw conveyors extend in opposite directions from a common inlet or from a manifold to which the respective inlets of the spreaders are connected; the screw conveyors may be coaxial or have axes which are parallel or inclined to each other.

A screw conveyor is generally effective in preventing the slurry from clogging the discharge holes in the cylinders but it may be removable from the inner cylinder to enable the clearance of any blockages which do occur.

The holes in the cylindrical walls of the inner and outer cylinders may be in corresponding groups or at corresponding discrete locations, or they may be in respective helical rows. Preferably, the holes are in rows along respective generatrices of the cylindrical walls. The holes in the outer cylinder may open externally into short discharge pipes or nozzles.

The amount of slurry ejected through the holes upon each rotation can be regulated by the variation of the rate of relative rotation of the cylinders and/or the pressure of the slurry in the inner cylinder without the need to alter the size of the holes, but some embodiments of the invention may have means for altering the aperture or size of the holes in the inner cylinder and/or the outer cylinder. In addition, means may be provided for closing selected holes in at least the outer cylinder.

Moreover, in order to ensure that the holes next to the slurry inlet do not receive a significantly greater charge of slurry than the holes further along the cylinders, the shaft of the screw conveyor may carry deflector means in correspondence with the inlet, the deflector means being adapted to direct the slurry onto the screw and hence along the entire cylinder. In a preferred embodiment, the deflector means comprise three equiangularly-spaced fins which are mounted on the shaft in planes parallel to the axis of the shaft, in correspondence with the opening of the inlet into the inner cylinder. In other embodiments, the deflector means may be constituted, for example, by inclined blades or baffles on the inner wall of the inlet at its opening into the inner cylinder.

In its preferred agricultural application to the spreading of liquid manure, the spreader of the invention is mounted transversely of a slurry tank, typically a tractor-drawn slurry tanker, so as to be substantially parallel to the ground and, in some cases, two spreaders may be mounted at the rear of the tank so as to project laterally thereof in opposite directions. These two spreaders may be coaxial but are preferably mounted on the rear of the tank in a V-shaped array so that they diverge in the direction of advance of the tank; the angle of divergence may be variable. These spreaders may be in accordance with the variant of the preferred embodiment mentioned above.

Spreaders of the invention intended for agricultural use may also be provided with means for opening the ground to receive the charge or dose of slurry or manure from each hole. These means may comprise tines, coulter-like fixed blades or rotary discs carried by the spreader in front of each hole (relative to the normal direction of advance over the ground) but they are preferably constituted by blades fixed to the periphery of the outer cylinder for rotation therewith. Although the blades may be on a helix around the periphery of the outer cylinder, each blade would normally be mounted on a circumference of the cylinder adjacent or coinciding with a respective hole, the blades having inclinations or configurations such as to cut through the soil and push it aside to form open slits beneath the holes.

The blades may be radial or dished and may extend right around the outer cylinder beside their respective holes but they are preferably part-conical and have an angular extent of less than 360° so that, with successive rotations of the cylinder, the blades form lines of discontinuous slits in the ground as the spreader advances. Moreover, the blades may be staggered angularly relative to each other so that the resulting lines of slits are themselves staggered relative to each other.

Means for engaging the soil turned up by the blades may be disposed adjacent the blades to prevent excessive lifting of the soil thereby and to push the soil back down to close the slits after the passage of the blades through the soil and the introduction of the slurry into the slits. These means may comprise cam-like projections on the outer cylinder adjacent each blade or rollers arranged to trail the blades as the spreader advances over the ground. Preferably, however, the ground-engaging means comprise substantially J-shaped, sprung fingers which are dependant from a cross member mounted in front of the cylinders relative to the normal direction of advance of the spreader whereby the fingers curve back beneath the outer cylinder beside respective blades for a certain, angular extent, intermediate the cutting edges of the blades and the surface of the cylinder.

The rotation of the outer cylinder relative to the inner cylinder (or vice versa) may be driven by drive means such as, for example, a motor carried by the spreader or a power take-off shaft of a tractor towing a slurry tanker to which the spreader is connected: Alternatively, the outer cylinder may be freely rotatable relative to the inner cylinder so that it is rotated by frictional or rolling contact with the ground as the spreader advances in use. The outer cylinder may be in direct frictional or rolling contact with the ground or the contact may be achieved through the blades or by means of a wheel or roller carried by the spreader. The wheel or roller may be connected to the outer cylinder directly or through a transmission, such as a chain or gear train.

The invention will now be more particularly described, by way of example, with reference to the accompanying drawings, in which:
Figure 1 is a diagrammatic longitudinal sectional view of a spreader for slurry, according to one embodiment of the present invention,
Figure 2 is a view similar to Figure 1, showing a slurry spreader according to another embodiment of the invention.
Figure 3 is a cross-section taken on the line III-III of Figure 2, and
Figure 4 is a diagrammatic plan view of one possible mode of use of the invention, on a reduced scale.

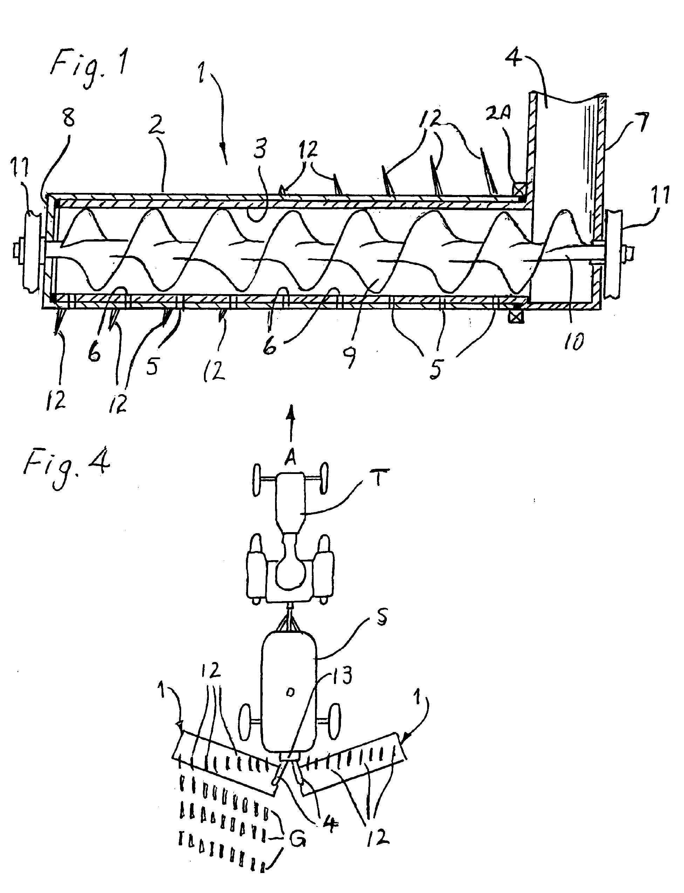

With reference initially to Figure 1, a spreader 1 for slurry, for example liquid manure, has a generally cylindrical body formed essentially by a pair of coaxial cylinders 2, 3 mounted one within the other with a limited clearance between them. The outer cylinder 2 is rotatable relative to the inner cylinder 3 which is fixed and communicates at one end with an inlet duct 4 for the slurry. The end of the outer cylinder 2 adjacent the inlet duct 4 is supported by rolling bearings 2A. The cylindrical walls of the cylinders 2, 3 define respective rows of holes 5, 6 along respective generatrices of the walls. The holes 5, 6 thus come into and out of register with each other as the outer cylinder 2 rotates. Annular seals are interposed between the ends of the cylinders 2, 3 to prevent the escape of slurry from the inner cylinder 2 other than through the holes 5, 6 when they are in register with each other.

The lateral wall 7 of the inlet duct 4 effectively closes one end of the cylindrical body formed by the cylinders 2, 3, whilst an end wall 8 of the outer cylinder 2 closes the opposite end of the body.

A screw conveyor 9 is housed in the inner cylinder 3 and is fast for rotation with the outer cylinder 2. Opposite ends of the shaft 10 of the conveyor 9 are supported for free rotation by respective bearings (not shown) carried by members 11 of a support frame of the spreader 1. One end portion of the shaft 10 projects through the end wall 8 of the outer cylinder 2, to which it is fixed for rotation, whilst the opposite end portion of the shaft 10 passes through a sealed bearing in the lateral wall 7 of the inlet duct. In use, the screw conveyor 9 is rotated, together with the outer cylinder 2, in a sense such as to move the slurry away from the inlet duct 4 and thus to pressurise it within the inner cylinder 3 so that it is expelled through the holes 5, 6 when they are brought into register with each other by the rotation of the outer cylinder 2 relative to the inner cylinder 3. The arrangement is such that the screw of the conveyor 9 does not obstruct the holes 6 in the inner cylinder 3 when they are in register with holes 5 in the outer cylinder 2.

In its preferred application to the spreading of liquid manure, the spreader 1 is provided with blades 12 for opening the ground to receive the manure from the holes 5,6. Each blade 12 is fixed to the periphery of the outer cylinder 2 for rotation therewith and is mounted on a circumference of the cylinder immediately adjacent a respective hole 5 in the outer cylinder 2 (to the left of the hole with reference to Figure 1). The blades 12 are part-conical and are inclined axially away from their respective holes (towards the end wall 8 in the example illustrated) so that they cut through the soil and push it aside to form open slits beneath the respective holes 5 when they are in register with the corresponding holes 6 in the inner cylinder 3. The blades 12 may be inclined at angles of between about 5° and 40° relative to the axes of the respective holes 5 (which axes are themselves radii of the cylinders) and the angle adopted can be varied in dependence upon the soil type and the width of the slits to be formed. The blades 12 have an angular extent of less than 360°, for example 180°, so that each blade 12 forms a line of discontinuous slits as the spreader 1 advances over the ground, and the blades 12 are staggered angularly relative to each other. The slits formed may, for example, be about 457mm long, 127mm deep, and between 25 and 50mm wide.

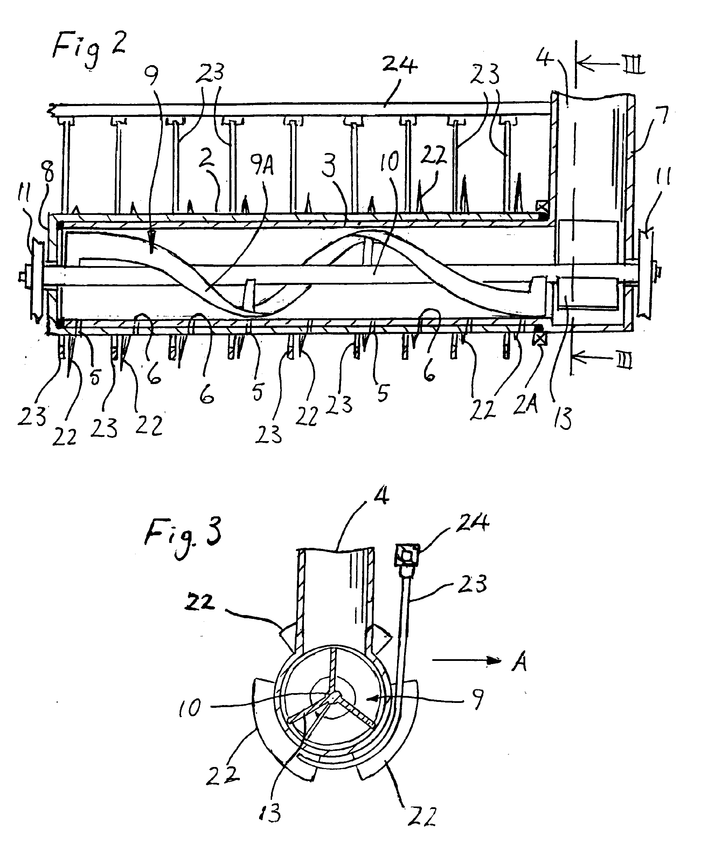

With reference now to Figures 2 and 3, in which parts the same as or equivalent to those of Figure 1 have been accorded the same reference numerals, the spreader 1 shown in these drawings differs from that of Figure 1 in that the screw conveyor 9 has a so-called "slow pitch" to reduce the likelihood of its obstructing any of the holes 5, 6 in register with each other as it rotates and is formed by a helical ribbon 9A in which the inner edges of its turns are spaced apart so that slurry can move along the inner cylinder when the screw 9 is not rotating. The ribbon 9A is supported at discrete points along a shaft 10 disposed coaxially within the inner cylinder 3 and rotatable with the outer cylinder 2. This conformation of the screw conveyor 9 enables the spreader 1 to be primed with slurry before use, ensuring an even distribution of slurry in the inner cylinder 3 and hence a uniform ejection of slurry from all the holes 5, 6 when the screw 9 rotates in use.

In addition, three equiangularly-spaced deflector fins 13 are mounted on the shaft 10 of the screw 9 in correspondence with the opening of the inlet duct 4 into the inner cylinder 3. The fins 13 are substantially the same width as the duct 4 and are disposed in planes parallel to the axis of the shaft 10. These fins 13 deflect the bulk of the incoming slurry from the inlet duct 4 onto the screw 9 and hence along the entire cylinder 3 so that the holes 5, 6 next to the duct 4 do not receive a disproportionately large amount of slurry.

In the embodiment of Figures 2 and 3, each blade 22 (only one of which is shown in Figure 3 for the sake of clarity) is part-conical but comprises three annular segments which are equiangularly spaced-apart around a common circumference of the outer cylinder 2 adjacent a respective hole 5. Each blade segment has an angular extent of substantially 90° and the three segments of each blade 22 are staggered angularly relative to the segments of the other blades 22. The blades 22, or more precisely the segments making up the blades, are more upright than the blades 12 of Figure 1, being inclined at angle of between about 5° and 10° to the axes of the holes 5. The blades 22 may, however, have inclinations anywhere in the general range mentioned with reference to the embodiment of Figure 1 according to the particular requirement of use or the type of soil.

A plurality of substantially J-shaped sprung fingers 23 are carried by a cross member 24 forming part of the frame 11 of the spreader 1 and mounted in front of (and above) the cylinders 2, 3 relative to the normal direction of advance A of the spreader 1. Each finger 23 depends from the cross member 24 and curves back beneath the outer cylinder 2 beside a respective blade 22 for a certain angular extent, intermediate the surface of the cylinder 2 and the cutting edge of the blade 22. In use, the fingers 23 engage the soil turned up by the blades to prevent excessive lifting of the soil thereby and to push the soil back down to close the slits after the passage of the blades 22 through the soil and the introduction of slurry into the slits. The fingers 23 may also help to keep the adjacent faces of the respective blades 22 free of soil.

Figure 4 shows one possible mode of use of the spreader 1 of the invention with a slurry tanker S towed by a tractor T. Two spreaders 1 are mounted at the rear of the tanker S in a shallow V-shaped array so that they are substantially parallel to the ground (or at least to the common axis of rotation of the wheels of the tanker S) and diverge in the direction of advance A, projecting beyond opposite sides of the tanker S to cover a swathe of ground wider than the latter. The spreaders 1 are mounted on the tanker S so that their angle of divergence can be varied, for example, separately by the adjustment of their connections to the tanker or together by means of an actuator, such as a double-acting hydraulic jack, between their adjacent ends.

The spreaders 1, which, as illustrated, are in accordance with the embodiment of Figure 1, are mirror images of each other with oppositely-handed screw conveyors (not shown) and blades 12 which are inclined in mutually opposite directions away from their respective holes in the outer cylinders. The inlet ducts 4 of the spreaders 1 are connected to a common outlet manifold 13 of the tanker, for example, by flexible hoses which can accommodate changes in the angle of divergence.

The blades 12 (or 22 in the case of the embodiment of Figures 3 and 4) are inclined away from their respective holes at an angle such that, at a certain angle of divergence of the spreaders 1, their cutting edges rotate in planes substantially parallel to the direction of advance A. If the angle of divergence of the spreaders 1 is altered from this certain angle, the width and profile of the slits formed by the blades 12 (or 22) will be altered accordingly, enabling slits of more or less constant width to be formed in different soil types or slits of different widths to be formed in the same soil type.

Since the blades 12 (or 22) on each spreader 1 are staggered angularly relative to each other, they form staggered lines of discontinuous slits, indicated G in relation to one of the spreaders in Figure 4. This arrangement of the blades 12 (or 22) is particularly advantageous in a spreader for use on hilly ground since the resulting pattern of slits G tends to impede or prevent run-off of the slurry.

In use, the frictional contact between the blades 12, 22 and the ground during the advance of the spreader 1 (or spreaders in the case of Figure 4) causes the rotation of the outer cylinder 2, and hence of the screw conveyor 9, relative to the inner cylinder 3. As mentioned above, the screw conveyor 9 pressurises the slurry (which may already be under a certain pressure from a feed pump in the tanker S) in the inner cylinder 3 for expulsion through the holes 5, 6 into prepared slits in the ground. The amount of slurry discharged through the pairs of holes 5, 6 when they are in register during each rotation of the outer cylinder 2 depends on the consistency of the slurry, the pressure of the slurry in the inner cylinder, the rate of rotation of the outer cylinder, and the dimensions of the holes: these parameters may be varied separately or in combination in accordance with the mode and requirements of use of the spreader 1.

By discharging the slurry into slits in the ground, the spreader 1 of the invention offers the advantage over conventional spreaders which spread the slurry generally over the ground surface that the slurry is trapped in the soil, reducing the loss of ammonia and attendant odour and making the slurry more effective as a fertiliser.

## Claims

1. A spreader (1) for slurry, comprising a pair of relatively rotatable cylinders (2, 3) which are mounted coaxially one within the other and the inner one (3) of which communicates with an inlet (4) for the slurry, and means (9) for pressurising the slurry in the inner cylinder (3), the cylindrical walls of the cylinders defining holes (5, 6) which can be brought into and out of register with each other by the relative rotation of the cylinders to allow the ejection therethrough of amounts of the slurry under pressure in the inner cylinder whilst the holes are in register.

2. A slurry spreader according to Claim 1, characterised in that the inner cylinder (3) is fixed and is connected to the inlet (4) at or adjacent one end, and in that the means for pressurising the slurry comprise a screw conveyor (9) housed in the inner cylinder (3) and rotatable together with the outer cylinder (2) to pump the slurry along the inner cylinder away from the inlet (4) and to expel the slurry through the holes (5, 6) in the walls of the cylinders as they are brought into register with each other by the rotation of the outer cylinder.

3. A slurry spreader according to Claim 2, characterised in that the screw conveyor (9) is formed by a helical ribbon (9A) in which the inner edges of its turns are spaced apart.

4. A slurry spreader according to Claim 2 or Claim 3, characterised in that the shaft (10) of the screw conveyor (9) carries deflector means (13) in correspondence with the inlet (4), the deflector means (13) being adapted to direct the slurry from the inlet (4) onto the screw conveyor (9).

5. A slurry spreader according to Claim 4, characterised in that the deflector means comprise three equiangularly-spaced fins (13) which are mounted on the shaft (10) in planes parallel to the axis of the shaft, in correspondence with the opening of the inlet (4) into the inner cylinder (3).

6. A slurry spreader according to any of the preceding claims, for agricultural use, characterised in that it is provided with means (12, 22) for opening the ground to receive slurry from the holes (5, 6) when they are in register.

7. A slurry spreader according to Claim 6, characterised in that the means for opening the ground comprise blades (12, 22) fixed to the periphery of the outer cylinder (2) for rotation therewith.

8. A slurry spreader according to Claim 7, characterised in that each blade (12, 22) is mounted on a circumference of the cylinder (2) adjacent or coinciding with a respective hole (5) therein, the blades having inclinations or configurations such as to cut through the soil and push it aside to form open slits beneath the holes.

9. A slurry spreader according to Claim 8, characterised in that the blades (12, 22) are part-conical and have an angular extent of less than 360°.

10. A slurry spreader according to Claim 9, characterised in that the blades (12, 22) are staggered angularly relative to each other.

11. A slurry spreader according to any of Claims 7 to 10, characterised in that means (23) for engaging the soil turned up by the blades (12, 22) are disposed adjacent the blades to prevent excessive lifting of the soil thereby and to push the soil back down and close the slits after the passage of the blades through the soil and the introduction of the slurry into the slits.

12. A slurry spreader according to Claim 11, characterised in that the soil-engaging means comprise substantially J-shaped, sprung fingers (23) which are dependent from a cross member (24) mounted in front of the cylinders (2, 3) relative to the normal direction of advance (A) of the spreader (1) whereby the fingers (23) curve back beneath the outer cylinder (2) beside respective blades (12, 22) for a certain angular extent, intermediate the cutting edges of the blades and the surface of the cylinder.

13. A slurry spreader according to any of Claims 7 to 12, characterised in that the outer cylinder (2) is freely rotatable relative to the inner cylinder (3) and is rotated by frictional or rolling contact between the blades (12, 22) and the ground as the spreader (1) advances in use.

14. An agricultural slurry spreader, including a slurry tank (S), characterised in that a spreader (1) according to Claim 2 or any of Claims 3 to 13 when dependent on Claim 2 is mounted transversely of the tank (S) so as to be substantially parallel to the ground, with the inlet (4) connected to the tank (S).

15. An agricultural slurry spreader according to Claim 14, characterised in that it includes two spreaders (1) mounted at the rear of the tank (S) so as to project laterally thereof in opposite directions in a V-shaped array so that they diverge in the direction of advance (A) of the tank.

16. An agricultural slurry spreader according to Claim 15, characterised in that the two spreaders (1) have oppositely-handed screw conveyors (9) which extend in opposite directions from a common inlet or from a manifold (13) to which the respective inlets (4) of the spreaders (1) are connected.

## Patentansprüche

1. Gülleverteiler, mit einem Paar von relativ gegeneinander drehbaren, koaxial zueinander angeordneten Zylindern (2, 3), wobei der innere Zylinder (3) in Verbindung steht mit einem Gülle-Einlaß und mit Mitteln (9) zur Druckbeaufschlagung der Gülle in dem inneren Zylinder (3); die Wände der Zylinder haben Löcher (5, 6), die in und außer Deckung miteinander gebracht werden können durch Verdrehung der Zylinder gegeneinander, zum Ausstoß jeweils einer Menge bzw. eines Quantums der in dem inneren Zylinder unter Druck stehenden Gülle oder dergleichen, während die Löcher gegeneinander ausgerichtet sind.

2. Gülleverteiler nach Anspruch 1, dadurch gekennzeichnet, daß der innere Zylinder (3) undrehbar ist und mit einem Einlaß (4) an oder nahe seinem einen Ende verbunden ist, und daß die Mittel zur Druckbeaufschlagung eine in dem inneren Zylinder gelagerte, zusammen mit dem äußeren Zylinder (2) drehbare Förderschnecke umfaßt, zum Pumpen der Gülle längs des inneren Zylinders von dem Einlaß (4) fort und zum Hindurchdrücken der Gülle durch die Löcher (5, 6) in den Wänden der Zylinder während sie durch die Drehung des äußeren Zylinders gegeneinander ausgerichtet sind.

3. Gülleverteiler gemäß Anspruch 2, dadurch gekennzeichnet, daß die Förderschnecke bzw. der Schraubenförderer (9) von einem spiraligen bzw. schraubenförmigen Band (9a) gebildet ist, dessen innere Kanten einen Abstand aufweisen.

4. Gülleverteiler nach Anspruch 3, dadurch gekennzeichnet, daß die Welle (10) der Förderschnecke Ableitmittel (13) in Übereinstimmung mit dem Einlaß (4) tragen, welche die Gülle von dem Einlaß (4) zu der Förderschnecke (9) leiten.

5. Gülleverteiler gemäß Anspruch 4, dadurch gekennzeichnet, daß die Ablenkmittel (3) gleichmäßig winkelversetzte Flügel (13) aufweisen, die parallel zu der Welle auf der Welle angebracht sind, in Übereinstimmung mit der Öffnung bzw. Einmündung des Einlasses (4) in den inneren Zylinder (3).

6. Gülleverteiler gemäß einem der vorhergehenden Ansprüche, zur landwirtschaftlichen Verwendung, dadurch gekennzeichnet, daß er versehen ist mit Mittel (12, 22) zur Öffnung des Erdreiches zur Aufnahme der Gülle von den gegeneinander ausgerichteten Löchern (5, 6).

7. Gülleverteiler nach Anspruch 6, dadurch gekennzeichnet, daß die Mittel zur Öffnung des Erdreiches Schneidblätter (12, 22) aufweisen, die am Umfang des äußeren Zylinders zur Drehung mit diesem angebracht sind.

8. Gülleverteiler gemäß Anspruch 7, dadurch gekennzeichnet, daß jedes Schneidblatt (12, 22) auf dem Umfang des Zylinders (2) in der Nähe oder in Übereinstimmung mit einem entsprechenden Loch (5) des Zylinders vorgesehen sind, wobei die Schneidblätter eine Neigung und/oder Gestaltung aufweisen derart, daß sie durch das Erdreich schneiden und es zur Seite drücken zur Bildung eines Schlitzes bzw. einer Furche unterhalb des jeweiligen Loches.

9. Gülleverteiler gemäß Anspruch 8, dadurch gekennzeichnet, daß die Schneidblätter (12, 22) teilweise konisch sind und eine Winkelausdehnung von weniger als 260° aufweisen.

10. Gülleverteiler gemäß Anspruch 9, dadurch gekennzeichnet, daß die Schneidblätter (12, 22) im Winkel bzw. in Umfangsrichtung gegeneinander versetzt sind.

11. Gülleverteiler gemäß einem der Ansprüche 7 bis 11, dadurch gekennzeichnet, daß Mittel (23) zur Einwirkung auf das von den Schneiden (12, 22) bewegte Erdreich in der Nähe der Schneidblätter (12, 22) vorgesehen sind, um ein übermäßiges Aufschieben von Erdreich zu verhindern und das Erdreich zurückzudrücken und die Schlitze nach der Eingabe der Gülle zu schließen.

12. Gülleverteiler nach Anspruch 11, dadurch gekennzeichnet, daß die gegen das Erdreich wirkenden Mittel gebildet sind von je einem federnden Finger oder gebogenen Federstab (23), die sich von einem vor dem Zylinder quer erstreckenden Querträger (24) hinaberstrecken, wobei die Finger (23) unterhalb des äußeren Zylinders, neben den jeweiligen Schneidblättern (12, 22) nach rückwärts gebogen sind, und sich zwischen den Schneidkanten der Schneidblätter und der Oberfläche des Zylinders erstrecken.

13. Gülleverteiler gemäß einem der Ansprüche 7 bis 12, dadurch gekennzeichnet, daß der äußere Zylinder (2) gegenüber dem inneren Zylinder (3) frei rotierbar (antreibbar) ist durch reibenden oder rollenden Kontakt zwischen den Schneidblättern (12, 22) und dem Untergrund bei der Vorwärtsbewegung des Gülleverteilers.

14. Landwirtschaftlicher Gülleverteiler, mit einem Gülletank (S), dadurch gekennzeichnet, daß ein Gülleverteiler (1) gemäß Anspruch 2 oder einem der von Anspruch 2 abhängigen Ansprüche 3 bis 13 angeordnet ist quer zu dem Gülletank (S), im wesentlichen parallel zu dem Untergrund, wobei der Einlaß (4) mit dem Tank (S) verbunden ist.

15. Landwirtschaftlicher Gülleverteiler gemäß Anspruch 14, dadurch gekennzeichnet, daß hinter dem Tank (S) zwei Gülleverteiler (1) angeordnet sind derart, daß sie sich nach entgegengesetzten Seiten erstrecken in V-Formation, so daß sie in der Bewegungsrichtung des Tanks (A) divergieren.

16. Landwirtschaftlicher Gülleverteiler gemäß Anspruch 15, dadurch gekennzeichnet, daß die Schraubenförderer oder Förderschnecken (9) innerhalb der beiden Gülleverteiler entgegengesetzt zueinander angeordnet sind und sich von einem gemeinsamen Einlaß oder von je einer Zuleitung (13), mit der der Einlaß (4) verbunden ist, in entgegengesetzte Richtungen erstrecken bzw. fördern.

## Revendications

1. Epandeur (1) de lisier, comprenant une paire de cylindres (2, 3) tournant l'un par rapport à l'autre et qui sont montés coaxialement l'un à l'intérieur de l'autre, le cylindre interne (3) communiquant avec une entrée (4) pour le lisier, et des moyens (9) pour mettre sous pression le lisier dans le cylindre interne (3), les parois cylindriques des cylindres définissant des orifices (5, 6) qui peuvent être amenés en alignement ou hors alignement les uns avec les autres par la rotation relative des cylindres pour permettre l'éjection à travers ces orifices de quantités de lisier sous pression dans le cylindre interne tandis que les orifices sont en alignement.

2. Epandeur de lisier selon la revendication 1, caractérisé en ce que le cylindre interne (3) est fixe et est connecté à l'entrée (4) à une extrémité ou au voisinage de celle-ci, et en ce que les moyens pour mettre sous pression le lisier comprennent un transporteur à vis (9) logé dans le cylindre interne (3) et susceptible de tourner conjointement avec le cylindre externe (2) pour pomper le lisier le long du cylindre interne de manière à l'éloigner de l'entrée (4) et à expulser le lisier à travers les orifices (5, 6) des parois des cylindres lorsqu'ils sont amenés en alignement l'un avec l'autre par la rotation du cylindre externe.

3. Epandeur de lisier selon la revendication 2, caractérisé en ce que le transporteur à vis (9) est formé par un ruban hélicoïdal (9A) dans lequel les bords internes des spires sont espacés les uns des autres.

4. Epandeur de lisier selon la revendication 2 ou 3, caractérisé en ce que l'arbre (10) du transporteur à vis (9) porte des moyens déflecteurs (13) en correspondance avec l'entrée (4), les moyens déflecteurs (13) étant adaptés pour diriger le lisier de l'entrée (4) sur le transporteur à vis (9).

5. Epandeur de lisier selon la revendication 4, caractérisé en ce que les moyens déflecteurs comprennent trois ailettes (13) espacées selon la même distance angulaire et qui sont montées sur l'arbre (10) dans des plans parallèles à l'axe de l'arbre, en correspondance avec l'ouverture de l'entrée (4) dans le cylindre interne (3).

6. Epandeur de lisier selon l'une quelconque des revendications précédentes à usage agricole, caractérisé en ce qu'il est prévu des moyens (12, 22) pour ouvrir le sol afin d'y recevoir le lisier provenant des orifices (5, 6) lorsqu'ils sont en alignement.

7. Epandeur de lisier selon la revendication 6, caractérisé en ce que les moyens d'ouverture du sol comprennent des lames (12, 22) fixées à la périphérie du cylindre externe (2) pour tourner avec lui.

8. Epandeur de lisier selon la revendication 7, caractérisé en ce que chaque lame (12, 22) est montée sur une circonférence du cylindre (2) au voisinage ou en coïncidence avec un orifice respectif (5) qui s'y trouve, les lames ayant des inclinaisons ou des configurations telle qu'elles puissent fendre le sol et le pousser de côté pour former des sillons ouverts en dessous des orifices.

9. Epandeur de lisier selon la revendication 8, caractérisé en ce que les lames (12, 22) sont partiellement coniques et ont une étendue angulaire inférieure à 360°.

10. Epandeur de lisier selon la revendication 9, caractérisé en ce que les lames (12, 22) sont placées en quinconce selon un certain angle les unes par rapport aux autres.

11. Epandeur de lisier selon l'une quelconque des revendications 7 à 10, caractérisé en ce que des moyens (23) permettant devenir en contact avec le sol retourné par les lames (12, 22) sont disposés au voisinage des lames pour empêcher un soulèvement excessif du sol de manière à repousser le sol vers le bas et refermer les sillons après le passage des lames à travers le sol et l'introduction du lisier dans les sillons.

12. Epandeur de lisier selon la revendication 11, caractérisé en ce que les moyens susceptibles de venir en contact avec le sol comprennent des doigts à ressort (23) sensiblement en forme de J qui pendent d'une traverse (24) montée devant les cylindres (2, 3) par rapport à la direction normale d'avancement (A) de l'épandeur (1), de sorte que les doigts (23) se recourbent en dessous du cylindre externe (2) à côté des lames respectives (12, 22) sur une certaine distance angulaire, entre les bords de coupe des lames et la surface du cylindre.

13. Epandeur de lisier selon l'une quelconque des revendications 7 à 12, caractérisé en ce que le cylindre externe (2) peut tourner librement par rapport au cylindre interne (3) et est soumis à une rotation par contact de frottement ou de roulement entre les lames (12, 22) et le sol au fur et à mesure que l'épandeur (1) avance en service.

14. Epandeur de lisier agricole, comprenant un réservoir de lisier (S), caractérisé en ce qu'un épandeur (1) selon la revendication 2 ou selon l'une quelconque des revendications 3 à 13, dans la mesure où elles dépendent de la revendication 2, est monté transversalement au réservoir (S) de manière à être sensiblement parallèle au sol, l'entrée (4) étant connectée au réservoir (S).

15. Epandeur de lisier agricole selon la revendication 14, caractérisé en ce qu'il comprend deux épandeurs (1) montés à l'arrière du réservoir (S) de manière à faire saillie latéralement de celui-ci dans des directions opposées selon un agencement en forme de V de telle sorte qu'ils divergent dans la direction d'avancement (A) du réservoir.

16. Epandeur de lisier agricole selon la revendication 15, caractérisé en ce que les deux épandeurs (1) ont des transporteurs à vis (9) à sens opposé qui s'étendent dans des directions opposées a partir d'une entrée commune ou à partir d'un collecteur (13) auquel les entrées respectives (4) des épandeurs (1) sont connectées.
